(19) Europäisches Patentamt / European Patent Office / Office européen des brevets

(11) **EP 4 163 820 A1**

(12) **EUROPEAN PATENT APPLICATION**

(43) Date of publication:
**12.04.2023  Bulletin 2023/15**

(21) Application number: **21201358.5**

(22) Date of filing: **07.10.2021**

(51) International Patent Classification (IPC):
**G06K 9/62** *(2006.01)*

(52) Cooperative Patent Classification (CPC):
**G06F 18/23213; G06F 18/214; G06F 18/2433**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Hangauer, Andreas**
  **80634 München (DE)**
• **Lebacher, Michael**
  **84513 Töging am Inn (DE)**

(74) Representative: **Siemens Patent Attorneys**
**Postfach 22 16 34**
**80506 München (DE)**

(54) **DETECTION AND REPRESENTATION OF DECISION REGIONS GENERATED BY AI BASED CLASSIFICATION ALGORITHM**

(57)   The invention discloses an automated method for detecting decision regions of an AI based classification algorithm, comprising:
- providing measured sensor data as initial data,
- classifying the initial data by applying the AI based classification algorithm,
- randomly generating further data by applying a probability distribution on the initial data,
- classifying the further data by applying the AI based classification algorithm,
- detecting decision regions by a data clustering algorithm, whereby each decision region contains initial and further data of only one class.

Uses of the disclosed method and a related system are disclosed as well.

FIG 3

EP 4 163 820 A1

**Description**

FIELD OF THE INVENTION

The present disclosure relates to an automated method, e.g., a computer-implemented method, and a system for detecting decision regions of an AI based classification algorithm using measured sensor data as initial data. The present disclosure further relates to a use of the disclosed method for different applications.

BACKGROUND OF THE INVENTION

AI models, e.g., machine learning algorithm, are widely used for different purposes, e.g., condition monitoring, product sorting, quality control, etc.

Condition monitoring: Sensors are omnipresent in all kinds of heavy machinery and equipment and, therefore, highly relevant for many different business fields. One especially important application field of sensors is monitoring the functionality of heavy machinery such as pumps, turbines, die casting machines etc. To do so, sensors are installed on these machines and measure different physical conditions such as current, temperature, pressure which enables monitoring of the state of the system. If the machinery is subject to different damages, the sensor values typically show suspicious patterns and anomalies in the data which allow to train machine learning models (= AI models) for detecting these anomalies.

Product sorting / quality control: Sorting of items or identification of alien objects from various sensor data is an important and frequent task in industry. Here, the sensor generated data is analysed to identify the type of incoming objects (e.g., classify by material, shape, colour, etc.) or to detect wrong objects which could either cause contaminations in the end-product or to simply identify incorrectly produced goods. Such systems typically need to be adaptive and make explainable decisions in the sense that they need to adapt to new situations (new material, new class of good, etc.) and generate decisions that can be evaluated and understood by the human machine operator. This explanation then can be used by the operator to efficiently make use of the adaptive property of the system, e.g., to refine the system behaviour with the aim to subsequently reduce false alarms, false classifications and/or related errors.

However, there are multiple problems related to process information from algorithms based on sensor data that still need to be solved. One especially crucial aspect comes with the identification and presentation of decision regions. In the given example with sensor data, decision regions are subareas of the data where the classifier (= AI model) decides either on anomalies or not (or on classes of different objects as in the example above). This is important to know in many cases that are of high practical relevance:

- Evaluation of the model by domain experts: Does it make sense to output an anomaly or a certain class for certain sensor data combinations?

- Evaluating the robustness of the model: Are there regions in the data where a small change of the input leads to a strong change in the output?

- Detection of overfitting: Are the decision regions small and contain only a few data points or do they correspond to larger areas?

- Evaluation and comparison of multiple models: Given that we have fitted multiple models, how do their decision regions intersect? For which data regions do we expect different answers by the algorithms? This is important for evaluation of adaptive systems.

Consequently, and motivated by the points above, it is important to achieve a robust and scalable detection and representation of decision regions when applying machine learning algorithms to sensor data for the purpose of anomaly detection and/or classification.

A decision region detection method must satisfy the following conditions:

a. The detection of the decision regions must be independent from the underlying decision model (i.e., the algorithm or machine learning model).

b. It must scale to a high dimension (many observations and features) .

c. The result must be human-interpretable.

d. It must be possible to compare multiple decision regions defined by multiple arbitrary algorithms.

e. The algorithm must perform sufficiently fast.

Satisfying one or more of the conditions a. to e. following state of the art solutions are known.

For model types with intrinsically interpretable decision regions

For many different algorithms the decision regions can be obtained directly and without efforts from the model itself. Examples are algorithms where the decision regions are separated by linear lines: the Linear Probability Model (LPM), Generalized Linear Models (GLM), Support Vector Machines (SVM), Decision Trees, etc. Furthermore, there exist models where the decision regions are not given by linear lines but are still easy to extract, for example the k-nearest neighbour algorithm. While for those algorithms it is easy to extract the decision regions, they are restricted to a certain model class and therefore not satisfying 1a and also 1d if one of the algorithms does not provide intrinsically interpretable decision regions.

For approximations of the decision regions

There exist some approaches to approximate the decision regions. For example, by finding convex hulls around the regions where the underlying model predicts a given class or alternatively approximating them with piece-wise linear components. However, these approaches are computationally expensive for even moderate dimensional data (e.g., 10 dimensions) and violate b. and e. It is also not obvious how the approximated objects can easily be used for model comparison (violating d.).

For Deep Decision boundary instance Generation (DeepDIG)

DeepDIG is a method based on adversarial example generation to generate samples near the decision boundaries but only for deep neural networks (hence violating a.). It also does not provide an obvious answer of how to use it for comparing multiple models (violating d.).

For local approximation with model-agnostic methods

Model-agnostic local methods such as LIME try to approximate decision boundaries locally with linear functions. However, to aggregate the local behaviour to a global one all points used for training must be processed (violating b.) and the aggregate might not be consistent in the sense that local decision regions could be conflicting (violating c.), this is especially problematic when comparing multiple models (violating d.).

SUMMARY OF THE INVENTION

The objective of the present invention is to provide a solution for an improved detection and an enhanced explicit representation of decision regions compared to state of the art when using machine learning algorithms for the purpose of anomaly detection and/or classification.
To accomplish the objective, the present invention provides a solution according to the independent claims. Advantageous embodiments are provided in the dependent claims.
According to a first aspect an algorithmic generation of further data based on initial data measured by a sensor is disclosed. According to a second aspect the detection and explicit representation of decision regions based on initial and further date is disclosed.
It is highlighted, that the disclosed solution is very generic and not limited to the usage of anomaly detection but also works for any standard supervised classification algorithms.
The invention claims an automated method for detecting decision regions of an AI based classification algorithm, comprising:

- providing measured sensor data as initial data,
- classifying the initial data by applying the AI based classification algorithm,
- randomly generating further data by applying a probability distribution on the initial data,
- classifying the further data by applying the AI based classification algorithm,
- detecting decision regions by a data clustering algorithm, whereby each decision region contains initial and further data of only one class.

In a further embodiment of the method the initial data are represented by initial feature vectors belonging to a first class and the further data are represented by further feature vectors,

- wherein randomly generating further data and classifying the further data comprises randomly drawing around the initial feature vectors for a given sample-number further feature vectors belonging to the first class.

In a further embodiment of the method the continuous probability distribution is limited to distributions described by the parameters mean and deviation, and the values of the initial feature vector are the means.
In a further embodiment the method further comprises:

- for every feature of every initial feature vector incrementally varying the deviation between a predetermined minimum deviation value and a predetermined maximum deviation value, and
- randomly drawing a predetermined sample number of further feature vectors for every value of the incrementally varied deviation.

In a further embodiment of the method the continuous probability distribution is a normal distribution.
In a further embodiment of the method the data clustering algorithm is DBSCAN (density-based spatial clustering of applications with noise) with the predetermined hyperparameters $\varepsilon$ and *MinPts*.
In a further embodiment of the method $\varepsilon$ is the sum of the minimum deviation value and the maximum deviation value, and *MinPts* is the square root of the sample number.
The invention further claims a use of the disclosed method for:

- counting the number of decision regions as the number of clusters determined by the data clustering algorithm,
- determining the size of the decision regions by calculating the number of initial and further feature data that fall in the respective clusters, and/or
- indicating overfitting of the AI based classification algorithm by counting the number of initial and further data that are classified as noise; and for:
- visualizing the decision regions by predetermined visualizations techniques; and for:
- comparing a first classification algorithm with a second classification algorithm by comparing the decision regions detected according to the method of one of the claims 1 to 7.

Finally, the invention discloses a system, comprising at least one processor, and at least one memory including program code which when executed by the processor provides operations comprising:
providing measured sensor data as initial data,

- classifying the initial data by applying the AI based classification algorithm,
- randomly generating further data by applying a probability distribution on the initial data,
- classifying the further data by applying the AI based classification algorithm,
- detecting decision regions by a data clustering algorithm, whereby each decision region contains initial and further data of only one class.

In further embodiment of the system the initial data are represented by initial feature vectors belonging to a first class and the further data are represented by further feature vectors, the operations further comprising:

- randomly generating further data and classifying the further data comprises randomly drawing around the initial feature vectors for a given sample-number further feature vectors belonging to the first class.

In further embodiment of the system the continuous probability distribution is limited to distributions described by the parameters mean and deviation,

- whereby the values of the initial feature vector are the means, and

whereby the operations further comprise:

- for every feature of every initial feature vector incrementally varying the deviation between a predetermined minimum deviation value and a predetermined maximum deviation value, and
- randomly drawing a predetermined sample number of further feature vectors for every value of the incrementally varied deviation.

In a further embodiment of the system -the continuous probability distribution is a normal distribution, and the data clustering algorithm is DBSCAN (density-based spatial clustering of applications with noise) with the predetermined hyperparameters $\varepsilon$ and *MinPts*.

In a further embodiment of the system $\varepsilon$ is the sum of the minimum deviation value and the maximum deviation value, and **MinPts** is the square root of the sample number.

The advantage of the invention is that the disclosed method and system is to provide a model-agnostic approximation of decision regions that is fast, scalable and allows to compare multiple models without any restriction on the models.

Further benefits and advantages of the present invention will become apparent after a careful reading of the detailed description with appropriate reference to the accompanying drawings.

BRIEF DESCRIPTION OF THE DRAWINGS

FIG. 1    shows a dot diagram of a classification algorithm with two features and two classes using initial data,

FIG. 2    shows a dot diagram of a classification algorithm with two features and two classes using additionally further data, and

FIG. 3    shows a dot diagram of a classification algorithm with two features and two classes showing only decision regions of class 1.

DETAILED DESCRIPTION OF THE INVENTION

Given a by sensors measured data matrix $x = (x_1,...,x_n)$ of dimension $(n \times P)$ - P = feature space dimension, n = number of initial vectors - and a model function $f(.)$ that outputs a class (i.e., it is a classifier). The initial feature vectors (= initial data) are applied to the model function f(.). In case of outputting a failure type we have $f(x_i) = c_k$ for $i = 1,...,n$ where $c_k \in C$ and $C$ being a set of different classes. E.g., $c_1 =$ 'no failure', $c_2 =$ 'slight anomaly', $c_3 =$ 'severe failure', etc.

For a better overview and the argumentation below, we assume only two different classes ($K = 2$) but this is without loss of generality. Since the disclosed methods are model agnostic, we are not restricted to any classifier and $f(.)$ can be a Deep Neural Network, a Random Forest or any other suitable Method that outputs a predicted class label (satisfying condition a above).

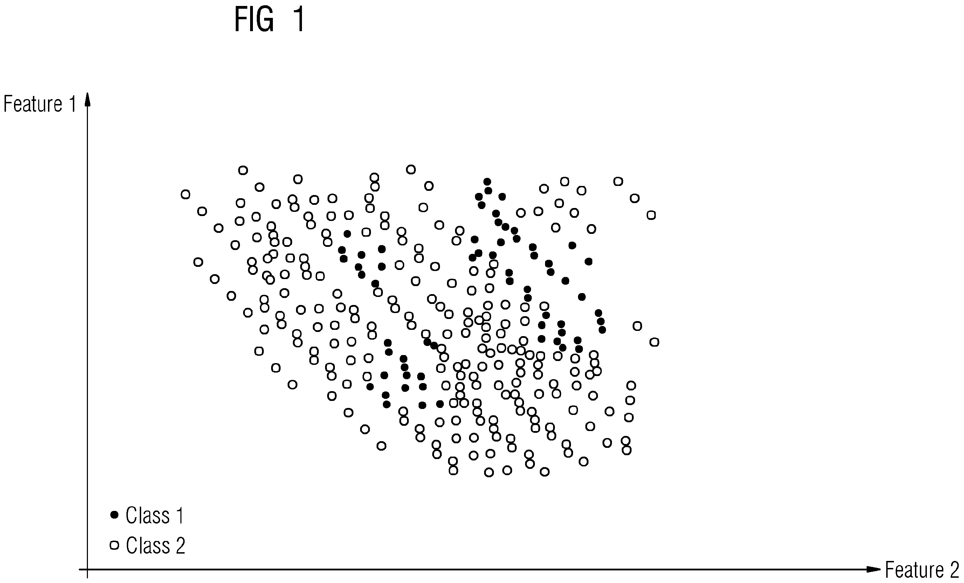

After applying the model function $f(.)$ we need to explore its global decision regions. An illustration of this situation is given in FIG. 1 where the two axes correspond to two features and the dots represent two different classes $c_1$ (filled-in dots in FIG. 1) and $c_2$ (blank dots in FIG. 1) as outputted by the model function $f(x_i)$ (= algorithm).

To determine the decision regions for class 1 we sample the space of the decision region of class 1 denser by adding new dots that belong to class 1 (= further data). Further data are achieved by applying the following method:

1. We set the minimum and maximum sampling area around the dots determined by the initial data to $d_{min}$ and $d_{max}$ and set $p$ for the number of samples to draw. Define the index set of all dots belonging to the class $c_1$ of interest to be $S = \{x_i : f(x_i) = c_1\}$ (= initial feature vectors belonging to class $c_1$). Set initially $S^* = \{ \}$

2. For $d \in \{d_{min},...,d_{max}\}$ and with increment *inc* do: For $x_i \in S$ do

    i. Sample (= draw randomly) $p$ times from a normal distribution $N(x_i,d^2)$ to obtain data $z = (z_1, ..., z_n)$ (= further feature vectors; In case of multidimensional input-features sampling can be done with a multivariate normal distribution).

    ii. Update $S^* = \{\{z_i: f(z_i) = c_1\},S^*\}$.

    iii. increment $d$ with *inc* and go to i.

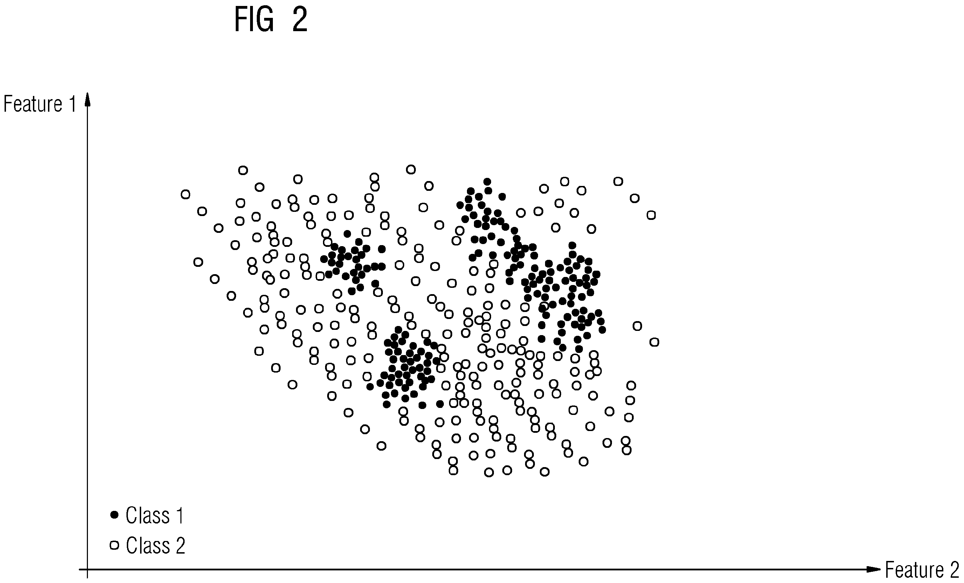

Sampling is fast with modern computers and the whole loop number 2 above can be preferably parallelized, hence satisfying condition 1b and 1e above. Adding the dots from $S^*$ results in the illustration of FIG. 2, where the regions for class 1 (fille-in dots) become much denser.

An alternative would be genetic statistical algorithms but, in most cases, but drawing from a normal distribution with increasing variance is sufficient.

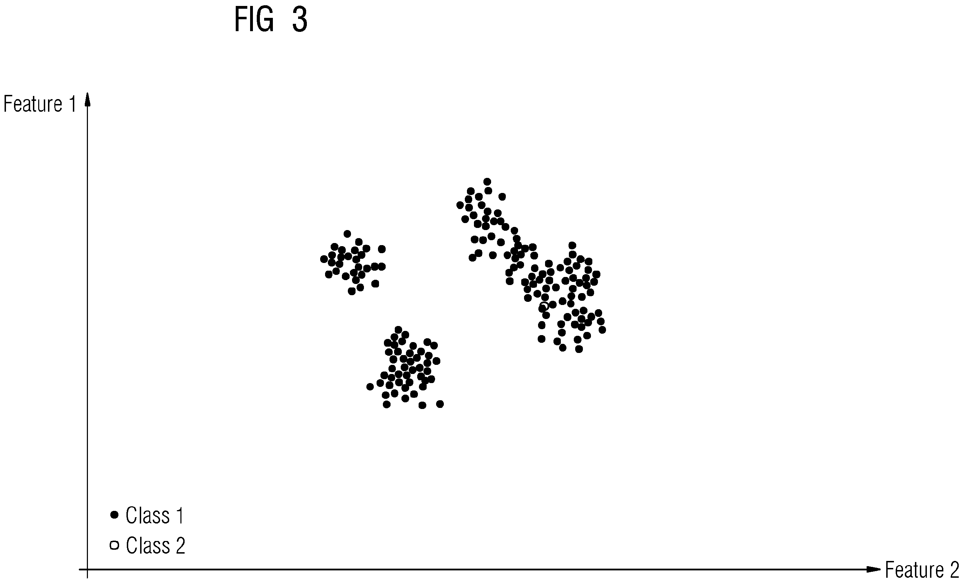

According to FIG. 3 we now subset the data such that only data points from $S^{**} = \{S^*,S\}$ (filled-in dots) remain. On the data in the set $S^{**}$ we now apply the well-known DBSCAN algorithm (with complexity $O(|S^{**}|\log(|S^{**}|))$) thereby satisfying condition 1e which allows to cluster dense objects with irregular shapes given two hyperparameters $\varepsilon$ and

*MinPts* where $\varepsilon$ is the radius around a given point and *MinPts* gives the minimum number of dots that we expect within the radius of the sphere to call it a dense region. Both parameters shall be defined according to specific needs.

Given the sampling procedure described above it is for example reasonable to set

$$\epsilon = 2\frac{d_{min}+d_{max}}{2} = d_{min} + d_{max}$$

and *MinPts* = $\sqrt{p}$ (= minimum number of points required to form a dense region). The output of DBSCAN will be a Cluster-ID for each dot that belongs to $S^{**}$ and it also can identify noise (i.e., dots in $S^{**}$) that do not belong to a dense region.

From the analysis of this it can be identified (in a human-interpretable way as demanded by condition 1c): How many decision regions exist can be inferred by counting the number of Cluster-IDs. The size of the decision regions can be evaluated by calculating the number of points that fall in the respective clusters. Indications of overfitting are possible by counting the number of dots that are classified as noise by DBSCAN.

Furthermore, it is possible to visualize the regions by suitable visualizations techniques (e.g., scatterplot matrices are principal components).

Given the general procedure above we need to add here how this procedure generalizes to the comparison of multiple algorithms (condition Id). E.g., if we want to compare the decision regions of $f_1(x_i)$ and $f_2(x_i)$. This is rather simple. If we want to know about the decision region for class $c_k$, we simply apply the disclosed algorithm separately for both models. Then we can use DBSCAN to investigate the following cases

|  | $f_1$ indicates $c_k$ | $f_2$ does not indicate $c_k$ |
|---|---|---|
| $f_2$ indicates $c_k$ | Cluster $\{x_i \in S^*: f_1(x_i) = f_2(x_i) = c_k\}$ | Cluster $\{x_i \in S^*: f_1(x_i) \neq c_k, f_2(x_i) = c_k\}$ |
| $f_2$ does not indicate $c_k$ | Cluster $\{x_i \in S^*: f_1(x_i) = c_k, f_2(x_i) \neq c_k\}$ | Cluster $\{x_i \in S^*: f_1(x_i) = f_2(x_i) \neq c_k\}$ |

If we apply DBSCAN to the four sets shown in the table above, we can detect the decision regions where both algorithms agree and those where they disagree and how they disagree.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

**Claims**

1. Automated method for detecting decision regions of an AI based classification algorithm, comprising:

    - providing measured sensor data as initial data,
    - classifying the initial data by applying the AI based classification algorithm,
    - randomly generating further data by applying a probability distribution on the initial data,
    - classifying the further data by applying the AI based classification algorithm,
    - detecting decision regions by a data clustering algorithm, whereby each decision region contains initial and further data of only one class.

2. The method according to claim 1,

    - wherein the initial data are represented by initial feature vectors belonging to a first class,
    - wherein the further data are represented by further feature vectors, and
    - wherein randomly generating further data and classifying the further data comprises randomly drawing around the initial feature vectors for a given sample-number further feature vectors belonging to the first class.

3. The method according to claim 2,

   - wherein the probability distribution is limited to distributions described by the parameters mean and deviation,
   - whereby the values of the initial feature vector are the means.

4. The method according to claim 3, further comprising:

   - for every feature of every initial feature vector incrementally varying the deviation between a predetermined minimum deviation value and a predetermined maximum deviation value, and
   - randomly drawing a predetermined sample number of further feature vectors for every value of the incrementally varied deviation.

5. The method according to one of the previous claims,

   - wherein the probability distribution is a normal distribution.

6. The method according to one of the previous claims,

   - wherein the data clustering algorithm is DBSCAN (density-based spatial clustering of applications with noise) with the predetermined hyperparameters $\varepsilon$ and *MinPts.*

7. The method according to claim 6 and 4,

   - wherein $\varepsilon$ is the sum of the minimum deviation value and the maximum deviation value, and *MinPts* is the square root of the sample number.

8. Using the method of one of the previous claims for:

   - counting the number of decision regions as the number of clusters determined by the data clustering algorithm,
   - determining the size of the decision regions by calculating the number of initial and further feature data that fall in the respective clusters, and/or
   - indicating overfitting of the AI based classification algorithm by counting the number of initial and further data that are classified as noise.

9. Using the method of one of the claims 1 to 7 for:

   - visualizing the decision regions by predetermined visualizations techniques.

10. Using the method of one of the claims 1 to 7 for:

    - comparing a first classification algorithm with a second classification algorithm by comparing the decision regions detected according to the method of one of the claims 1 to 7.

11. System, comprising at least one processor, and at least one memory including program code which when executed by the processor provides operations comprising:
    providing measured sensor data as initial data,

    - classifying the initial data by applying the AI based classification algorithm,
    - randomly generating further data by applying a probability distribution on the initial data,
    - classifying the further data by applying the AI based classification algorithm,
    - detecting decision regions by a data clustering algorithm, whereby each decision region contains initial and further data of only one class.

12. The system according to claim 11,

    - wherein the initial data are represented by initial feature vectors belonging to a first class,
    - wherein the further data are represented by further feature vectors, and
    - wherein randomly generating further data and classifying the further data comprises randomly drawing around the initial feature vectors for a given sample-number further feature vectors belonging to the first class.

**13.** The system according to claim 12,

- wherein the probability distribution is limited to distributions described by the parameters mean and deviation,
- whereby the values of the initial feature vector are the means, and

whereby the operations further comprise:

- for every feature of every initial feature vector incrementally varying the deviation between a predetermined minimum deviation value and a predetermined maximum deviation value, and
- randomly drawing a predetermined sample number of further feature vectors for every value of the incrementally varied deviation.

**14.** The system according to one of the claims 11 to 13,

- wherein the probability distribution is a normal distribution, and
- wherein the data clustering algorithm is DBSCAN (density-based spatial clustering of applications with noise) with the predetermined hyperparameters $\varepsilon$ and *MinPts.*

**15.** The system according to claim 14,

- wherein $\varepsilon$ is the sum of the minimum deviation value and the maximum deviation value, and *MinPts* is the square root of the sample number.

FIG 1

# FIG 2

● Class 1
○ Class 2

Feature 1

Feature 2

FIG 3

Feature 1

● Class 1
○ Class 2

Feature 2

EP 4 163 820 A1

Europäisches
Patentamt

European
Patent Office

Office européen
des brevets

# EUROPEAN SEARCH REPORT

**Application Number**

EP 21 20 1358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG TIAN-TIAN ET AL: "Density-Based Multiscale Analysis for Clustering in Strong Noise Settings With Varying Densities", IEEE ACCESS, vol. 6, 15 May 2018 (2018-05-15), pages 25861-25873, XP011684892, DOI: 10.1109/ACCESS.2018.2836389 [retrieved on 2018-06-04] * Sections III. "Density-based multscale analysis for clustering" and IV. "Experimental evaluation" * | 1-15 | INV. G06K9/62 |
| X | GUANSONG PANG ET AL: "Deep Learning for Anomaly Detection: A Review", ARXIV.ORG, 5 December 2020 (2020-12-05), XP081716549, * Section 5. "Learning feature representation of normality" * | 1-5,8-13 | |
| A | CRUSSELL JONATHAN ET AL: "Attacking DBSCAN for Fun and Profit", PROCEEDINGS OF THE 2015 SIAM INTERNATIONAL CONFERENCE ON DATA MINING, 30 June 2015 (2015-06-30), pages 235-243, XP055900982, Philadelphia, PA DOI: 10.1137/1.9781611974010.27 ISBN: 978-1-61197-401-0 * the whole document * | 1-15 | TECHNICAL FIELDS SEARCHED (IPC) G06K |

The present search report has been drawn up for all claims

| Place of search | Date of completion of the search | Examiner |
|---|---|---|
| The Hague | 15 March 2022 | Grigorescu, Cosmin |